# EUROPÄISCHE PATENTSCHRIFT

(11) **EP 3 640 005 B1**
(45) Veröffentlichungstag und Bekanntmachung des Hinweises auf die Patenterteilung: **10.11.2021**
(21) Anmeldenummer: 19203756.2
(22) Anmeldetag: 17.10.2019
(51) Int. Cl.: B29C 49/42, B29C 49/46, B29C 49/58, B29C 49/12, B29L 31/00, B29C 49/78, B29C 49/06

(54) **FORMFÜLLEN MIT ANSCHLIESSENDER VERSCHLIESSUNG UNTER INNENDRUCK**
MOULD FILLING WITH CONNECTING CLOSURE UNDER INNER PRESSURE
REMPLISSAGE DE MOULE À FERMETURE SUBSÉQUENTE SOUS PRESSION INTERNE

(30) Priorität: 17.10.2018 DE 102018125794
(43) Veröffentlichungstag der Anmeldung: 22.04.2020
(73) Patentinhaber: Krones AG, 93073 Neutraubling (DE)
(72) Erfinder: Meier, Dominik, 93073 Neutraubling (DE); Pense, Andreas, 93073 Neutraubling (DE); Hanesch, Cora, 93073 Neutraubling (DE); Vornehm, Andreas, 93073 Neutraubling (DE); Betz, Christian, 93073 Neutraubling (DE)
(74) Vertreter: Bittner, Bernhard

(56) Entgegenhaltungen:
- EP-A2- 0 409 388
- WO-A1-2013/020884
- WO-A1-2017/078773
- WO-A1-2018/185277
- US-A- 3 969 455
- US-B1- 6 925 780

## Beschreibung

Die vorliegende Erfindung betrifft eine Vorrichtung und ein Verfahren zum Umformen von Kunststoffvorformlingen zu Kunststoffbehältnissen. Derartige Verfahren sind aus dem Stand der Technik seit Langem bekannt. Bei üblichen Verfahren werden erwärmte Kunststoffvorformlinge zunächst zu Kunststoffbehältnissen expandiert, was beispielsweise in Blasformmaschinen erfolgt. Diese so expandierten Behältnisse werden anschließend mit einem Füllgut, wie etwa einem Getränk befüllt.

In jüngerer Zeit sind auch Vorrichtungen und Verfahren bekannt geworden, bei denen Kunststoffvorformlinge unmittelbar mit dem abzufüllenden Füllgut befüllt und dabei auch expandiert werden. Um ein Behältnis aus einem Vorformling mit Hilfe eines flüssigen Mediums zu formen, werden die über einen Ofen aufgeheizten Vorformlinge an eine Umformungsstation übergeben. Nachdem das Behältnis innerhalb der Umformungsstation geformt wurde und gleichzeitig mit dem flüssigen Medium befüllt wurde, wird das fertige, jedoch noch unverschlossene, Behältnis aus der Umformungsstation entnommen und über einen Behältnistransport weitergeleitet.

Während die Behältnisse expandiert und gleichzeitig befüllt werden, stehen sie unter einem hohen Druck. Zu diesem Zweck ist es bekannt, dass mittels einer Druckerzeugungseinrichtung bzw. Druckbeaufschlagungseinrichtung, wie etwa einer Pumpe oder auch einem Kolben der Druck erzeugt wird, mit dem das flüssige Füllgut in den zu expandierenden Kunststoffvorformling eingefüllt wird. Nach dem Expandieren und Befüllen der Behältnisse werden die Behältnisse nach dem Stand der Technik auf Umgebungsdruck entspannt und weitertransportiert.

Dies ist besonders bei karbonisiertem Füllgut nachteilhaft, weil es hierbei zu einem Überschäumen kommen kann. Auch bei sogenannten Hotfill-Prozessen, bei denen ein erwärmtes Füllgut in die Behältnisse gefüllt wird, ist der derzeitige Stand der Technik negativ. Werden die auf Umgebungsdruck entspannten Behältnisse verschlossen, solange das Füllgut noch erwärmt ist, kommt es beim Abkühlprozess des Füllguts zu einem Unterdruck. Hierdurch besteht eine Gefahr der Verformung der Kunststoffbehältnisse. Dieser Verformung wird derzeit durch spezielle Designmerkmale der Flaschen entgegengewirkt, was jedoch wiederum zu einer fehlenden Designfreiheit führt. Auch bei stillem Füllgut soll im Rahmen dieser Erfindung die mechanische Belastbarkeit der Kunststoffbehältnisse, insbesondere die Topload-Belastbarkeit, erhöht werden.

Die Druckschrift US 3 969 455 offenbart eine Vorrichtung zum Expandieren und Befüllen von Kunststoffvorformlingen gemäß dem Oberbegriff des Anspruchs 1 und ein Verfahren gemäß dem Oberbegriff des Anspruchs 10.

Der vorliegenden Erfindung liegt die Aufgabe zugrunde, eine Vorrichtung und ein Verfahren zur Verfügung zu stellen, um die derzeitigen Nachteile des Stands der Technik zu überwinden. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Expandieren und Befüllen von Kunststoffvorformlingen zu Kunststoffbehältnissen mittels eines flüssigen Mediums weist wenigstens eine Umformungsstation auf, die wiederum eine Hohlform aufweist, innerhalb der die Kunststoffvorformlinge durch Beaufschlagung mit einem flüssigen Medium zu den Kunststoffbehältnissen expandierbar und gleichzeitig befüllbar sind. Die Umformungsstation ist dabei an einem bevorzugt beweglichen Träger angeordnet. Die Umformungsstation weist außerdem eine Einfülleinrichtung auf, welche das flüssige Medium den Kunststoffvorformlingen unter Druck zuführt.

Erfindungsgemäß weist die Umformungsstation außerdem eine Druckkammer auf, welche mit einem Gas beaufschlagbar ist, wobei die Einfülleinrichtung zum Befüllen der Kunststoffvorformlinge in die Druckkammer einführbar und nach dem Befüllen zumindest teilweise wieder ausführbar ist, und wobei eine Verschließeinheit in die Druckkammer einführbar ist, um die expandierten und befüllten Kunststoffbehältnisse zu verschließen.

Im Rahmen der vorliegenden Anmeldung wird unter der Umformungsstation die gesamte Einrichtung verstanden, welche insbesondere auch eine Druckerzeugungseinrichtung und wenigstens eine Einfülleinrichtung aufweist. Unter der Einfülleinrichtung wird derjenige Bestandteil der Vorrichtung verstanden, der die Flüssigkeit in das jeweilige Behältnis einfüllt. Unter einer Verschließeinheit wird derjenige Bestandteil verstanden, der dem jeweiligen Behältnis einen Behältnisverschluss zuführt und den Behältnisverschluss an dem Behältnis anbringt.

Bei den Kunststoffbehältnissen kann es sich insbesondere um Flüssigkeitsbehältnisse, insbesondere Getränkebehältnisse, wie beispielsweise Flaschen handeln. Die Kunststoffbehältnisse weisen bevorzugt einen Grundkörper und ein (offenes) Mundstück auf. Das Mundstück kann bevorzugt mit einem Behältnisverschluss verschlossen werden. Der Behältnisverschluss kann entsprechend gängiger Ausgestaltungen gewählt werden. In Betracht kommen beispielsweise Push-On- oder Schraubverschlüsse. Der Behältnisverschluss kann einen Sicherheitsring aufweisen, insbesondere in Form eines perforierten Kunststoffrings, der bei erstmaligem Öffnen des Behältnisverschlusses an der Perforation ab- oder zerreißt.

Die Hohlform, in der die Kunststoffvorformlinge ausgeformt werden, weist ein Negativ des herzustellenden Behältnisses auf. Beim Expandieren werden die Kunststoffvorformlinge dabei bevorzugt gegen die Innenwandung dieser Hohlform expandiert. Um verschiedene Behältnisse herstellen zu können, ist die Hohlform daher auswechselbar gestaltet. Die Hohlform besteht bevorzugt aus zwei Seitenteilen. Diese sind bevorzugt schwenkbar zueinander angeordnet, damit ein Kunststoffvorformling leicht aufgenommen werden kann, bzw. ein Kunststoffbehältnis leicht entnommen werden kann. Vorteilhaft weist die Hohlform außerdem ein Bodenteil auf. Bevorzugt ist die Hohlform an einer Formträgerschale angeordnet. Diese Formträgerschale ist wiederum bevorzugt an einem Formträger angeordnet. Vorteilhaft ist die Hohlform temperierbar ausgestaltet. Eine Temperierung kann entweder an der Hohlform selbst erfolgen, über die Formträgerschale oder über den Formboden.

In der Umformungsstation ist die Druckkammer bevorzugt oberhalb der Hohlform angeordnet. Bei der vorliegenden Erfindung sind Begriffe wie "oben" und "unten" insbesondere als Richtungsangabe in Bezug auf die Kunststoffvorformlinge bzw. Kunststoffbehältnisse zu verstehen. Als "oben" wird bei einem Kunststoffvorformling bzw. Kunststoffbehältnis der Bereich des Mundstücks bezeichnet. Diese Richtungsangaben müssen nicht mit den Richtungsangaben im Schwerefeld der Erde übereinstimmen. Bevorzugt stimmen die Richtungsangaben jedoch im Wesentlichen mit den Richtungsangaben im Schwerefeld der Erde überein. Unter "im Wesentlichen" ist dabei zu verstehen, dass auch Abweichungen von wenigen Grad darunterfallen sollen.

Bei einer vorteilhaften Ausführungsform befindet sich der Grundkörper des Kunststoffvorformlings bzw. des Kunststoffbehältnisses in der Hohlform, während das Mundstück außerhalb der Hohlform ist. Bevorzugt befindet sich das Mundstück innerhalb der Druckkammer.

Die Einfülleinrichtung kann in Form einer länglichen Düse ausgestaltet sein, durch die dem Kunststoffvorformling das flüssige Medium zum Expandieren und Befüllen zugeführt wird.

Bei einer vorteilhaften Ausführungsform ist die Einfülleinrichtung dichtend an einem Mundstück des Kunststoffvorformlings anlegbar. Hierfür kann die Einfülleinrichtung bevorzugt eine Dichtungseinrichtung aufweisen. Diese Dichtungseinrichtung kann beispielsweise mit einem Tragring des Kunststoffbehältnisses oder mit einer Außen- oder Innenwandung des Mundstücks abdichten.

Besonders bevorzugt liefert die Einfülleinrichtung den Volumenstrom und den Druck, um das Behältnis auszuformen. Die Einfülleinrichtung kann dabei insbesondere einen Druck von mehr als 10 bar, besonders bevorzugt von mehr als 15 bar liefern. Vorteilhaft befinden sich hierbei sowohl das Mundstück als auch zumindest abschnittsweise die Einfülleinrichtung innerhalb der Druckkammer. Der Druck wird dabei bevorzugt über eine Druckerzeugungseinrichtung erzeugt. Die Druckerzeugungseinrichtung für die Einfülleinrichtung ist bevorzugt außerhalb der Druckkammer angeordnet.

Bevorzugt weist die Vorrichtung außerdem ein Reservoir für das Füllgut auf.

Bei einer besonders vorteilhaften Ausführungsform ist gleichzeitig zum Expandier- und Befüllvorgang ein Druck an der Druckkammer anlegbar. In der Druckkammer wird der Druck bevorzugt über Zuführen eines unter Druck stehenden Gases erzeugt. Hierbei kann es sich beispielsweise um CO₂, N₂ oder Umgebungsluft handeln. Es ist jedoch auch ein anderes Gas möglich.

Bevorzugt ist die Verschließeinheit geradlinig auf das Kunststoffbehältnis zustellbar. Insbesondere ist bevorzugt auch ein aufgenommener Behältnisverschluss geradlinig auf das Kunststoffbehältnis zustellbar. Besonders bevorzugt wird der Behältnisverschluss derart von der Verschließeinheit gehalten, dass er bei einer geradlinigen Bewegung der Verschließeinheit direkt auf das Mundstück des Kunststoffbehältnisses zugestellt wird. Die Linearbewegung der Verschließeinheit kann insbesondere durch eine Kurve, einen Servomotor oder mithilfe einer Federvorspannung erfolgen. Die Richtung dieser Linearbewegung der Verschließeinheit auf die Mündung des Kunststoffbehältnisses zu wird als Zustellrichtung der Verschließeinheit bezeichnet.

Bei einer bevorzugten Ausführungsform ist die Zustellrichtung der Verschließeinheit nicht parallel zu einer Längsachse der Kunststoffbehältnisse. Vorteilhaft schließen somit die Längsachse der Kunststoffbehältnisse und die Zustellrichtung der Verschließeinheit einen Winkel ein, der von 0° verschieden ist. Vorteilhaft handelt es sich dabei jedoch um einen Winkel, der maximal 90° ist. Bevorzugt schließen die Längsachse der Kunststoffbehältnisse und die Zustellrichtung der Verschließeinheit einen Winkel ein, der unter 80° liegt, noch bevorzugter unter 70° und besonders bevorzugt unter 65°. Bevorzugt ist der Winkel größer als 10°, noch bevorzugter größer als 15° und besonders bevorzugt größer als 20°.

Bevorzugt ist die Einfülleinrichtung in Längsachse zum Kunststoffvorformling bzw. dem Kunststoffbehältnis angeordnet.

Vorteilhaft weist die Vorrichtung außerdem eine Reckstange auf. Diese Reckstange ist vorteilhaft dazu geeignet und dazu vorgesehen, den Kunststoffvorformling in axialer Richtung vorzustrecken. Bevorzugt ist daher die Reckstange in Längsachse zum Kunststoffvorformling angeordnet. Vorteilhaft ist die Reckstange in die Einfülleinrichtung integriert. Insbesondere kann die Reckstange innerhalb der Einfülleinrichtung verlaufen. Es ist jedoch auch möglich, dass die Reckstange selbst als Einfülleinrichtung ausgebildet ist.

Bei einer alternativen bevorzugten Ausführungsform wird die Einfülleinrichtung schräg zu einer Längsachse der Kunststoffvorformlinge in die Druckkammer eingeführt. Vorteilhaft schließen somit die Längsachse der Kunststoffvorformlinge bzw. Kunststoffbehältnisse und die Einfülleinrichtung einen Winkel ein, der von 0° verschieden ist. Bevorzugt wird der Winkel dabei so gewählt, dass sich ein Optimum aus dem Fließwiderstand des flüssigen Mediums und der Kräfte auf Dichtungen bzw. Führungen ergibt. Vorteilhaft handelt es sich dabei jedoch um einen Winkel, der kleiner als 90° ist. Bevorzugt schließen die Längsachse der Kunststoffvorformlinge bzw. Kunststoffbehältnisse und die Einfülleinrichtung einen Winkel ein, der unter 80° liegt, noch bevorzugter unter 70° und besonders bevorzugt unter 65°. Bevorzugt ist der Winkel größer als 10°, noch bevorzugter größer als 15° und besonders bevorzugt größer als 20°.

Dadurch, dass die Einfülleinrichtung schräg zur Längsachse der Kunststoffvorformlinge steht, ist es nur schwer möglich, eine Reckstange wie im Stand der Technik zu integrieren. Nach dem Stand der Technik sind sowohl die Einfülleinrichtung als auch die Reckstange parallel zur Längsachse der Kunststoffvorformlinge angeordnet. Dabei ist die Reckstange nach dem Stand der Technik gewöhnlich wahlweise als Einfülleinrichtung ausgebildet oder die Reckstange verläuft innerhalb der Einfülleinrichtung.

Bei einer bevorzugten Ausführungsform wird der Kunststoffvorformling mit einer Dehneinrichtung mechanisch gestreckt. Vorteilhaft ist eine Dehneinrichtung in Längsrichtung des Kunststoffvorformlings vorgesehen sein, die den Kunststoffvorformling vorstreckt, bevor der Expansionsvorgang mit dem flüssigen Medium beginnt.

Zur besseren Führung des Kunststoffvorformlings kann beispielsweise ein Counter Stretch Rod vorgesehen sein. Hierbei wird aus der Bodentasse eine Stange zur Außenseite des Kunststoffvorformlings hochgefahren. Vorteilhaft befindet sich die Kuppe des Kunststoffvorformlings zwischen einer Reckstange und einem Counter Stretch Rod. Hierdurch kann vorteilhaft vermieden werden, dass der Anspritzpunkt verläuft.

Bei einer Ausgestaltungsvariante ohne Reckstange ist es vorteilhaft möglich, einen Impuls auf den Kunststoffvorformling aufzubringen. Bevorzugt ist dieser Impuls stark genug, um den Kunststoffvorformling längs zu recken. Vorteilhaft wird in dieser Ausführungsform die Kuppe durch ein Counter Stretch Rod stabilisiert, ohne dass eine Reckstange von der anderen Seite gegenwirkt.

Es ist auch möglich, die Materialverteilung auf andere Weise von unten in der Hohlform zu beeinflussen. So ist es beispielsweise denkbar, dass in der Hohlform ein Unterdruck angelegt wird, der die Ausdehnung des Kunststoffvorformlings unterstützt.

Bei einer weiteren bevorzugten Ausführungsform ist die Verschließeinheit in einer Achse mit einer Längsachse des Kunststoffvorformlings bzw. des Kunststoffbehältnisses angeordnet. Bevorzugt schließt somit auch die Einfülleinrichtung mit der Verschließeinheit einen von 0° verschiedenen Winkel ein. Vorteilhaft ist die Verschließeinheit auf der Seite der Druckkammer angeordnet, die der Seite, die das Mundstück des Kunststoffvorformlings bzw. des Kunststoffbehältnisses aufnimmt, gegenüberliegt. Bevorzugt sind die Verschließeinheit und das Mundstück innerhalb der Druckkammer voneinander maximal räumlich beabstandet. Vorteilhaft weist die Verschließeinheit eine Halteeinrichtung auf, die einen Behältnisverschluss aufnehmen und halten kann. Bevorzugt ist diese Halteeinrichtung an der Verschließeinheit derart angeordnet, dass die Halteeinrichtung und ein ggf. aufgenommener Behältnisverschluss in die Druckkammer hineinragen.

Bevorzugt ermöglicht die Verschließeinheit außerdem eine Drehbewegung des Behältnisverschlusses. Besonders bevorzugt ist die Verschließeinheit dazu geeignet und dazu vorgesehen, einen Behältnisverschluss am Mundstück eines Kunststoffbehältnisses anzubringen. Insbesondere ist sie dazu geeignet und dazu vorgesehen, einen Behältnisverschluss auf das Mundstück eines Kunststoffbehältnisses zu schrauben.

Bei einer ebenfalls bevorzugten Ausführungsform ermöglicht die Reckstange und/oder die Einfülleinrichtung eine Drehbewegung des Behältnisverschlusses. Es ist auch denkbar, dass in der Druckkammer eine separate Dreheinrichtung angeordnet ist. Vorteilhaft ist der durch die Verschließeinheit auf das Kunststoffbehältnis zugestellte Behältnisverschluss durch die Reckstange und/oder die Einfülleinrichtung und/oder eine separate Dreheinrichtung auf dem Mundstück des Kunststoffbehältnisses aufschraubbar.

Bei einer ebenfalls bevorzugten Ausführungsform, beispielsweise für Snap-On Verschlüsse, ist der Behältnisverschluss durch die Reckstange und/oder die Einfülleinrichtung auf dem Mundstück des Kunststoffbehältnisses aufdrückbar.

Bei einer bevorzugten Ausführungsform kann die Verschließeinheit außerdem einen Sicherheitsring an dem Kunststoffbehältnis anbringen. Vorteilhaft ist dieser Sicherheitsring am Behältnisverschluss angeordnet. Bevorzugt kann die Verschließeinheit einen Behältnisverschluss mit einem Sicherheitsring am Mundstück eines Kunststoffbehältnisses anbringen und insbesondere aufschrauben. Dies erfolgt bevorzugt mit einer Drehsteuerung. Vorteilhaft wird dabei das Drehmoment erfasst, um festzustellen, wann das Behältnis verschlossen ist.

Bei einer bevorzugten Ausführungsform ist die Verschließeinheit von einem Bereich außerhalb der Druckkammer in einen Bereich in der Druckkammer verfahrbar und umgekehrt. Die Wandung der Druckkammer weist daher vorteilhaft eine Öffnung auf, durch die die Verschließeinheit einfahrbar ist. Bevorzugt wird die Öffnung in der Wandung von der Verschließeinheit verschlossen. Besonders bevorzugt ist die Öffnung in der Wandung von der Verschließeinheit auch dann verschlossen, wenn die Verschließeinheit maximal in die Druckkammer eingefahren ist.

Vorteilhaft ist die Verschließeinheit daher zur Wandung der Druckkammer abgedichtet. Für diese Abdichtung kommen beispielsweise Lippendichtungen in Betracht. Es ist auch möglich, dass die Verschließeinheit auf einen Flansch auffährt und dort abdichtet. Vorteilhaft wird die Linearbewegung in einer Längsführung der Verschließeinheit durchgeführt und abgedichtet. Dies hat den Vorteil, dass die Dichtung nicht bei jeder Linearbewegung der Verschließeinheit einfädeln muss. Somit tritt ein geringerer Verschleiß auf.

Bei einer weiteren bevorzugten Ausführungsform ist die Verschließeinheit vollständig aus der Druckkammer ausführbar. Vorteilhaft kann die Verschließeinheit, wenn sie vollständig aus der Druckkammer ausgeführt ist, außerhalb der Druckkammer einen Behältnisverschluss aufnehmen. Die Aufnahme des Behältnisverschlusses ist bevorzugt unabhängig von einem Belegungszustand der Umformungsstation möglich. Bevorzugt ist die Aufnahme eines Behältnisverschlusses durch die Verschließeinheit während der Übergabe eines Kunststoffvorformlings an die Umformungsstation möglich. Bevorzugt ist der Verschluss bei Umgebungsdruck in die Druckkammer einbringbar, bevor der Druck erhöht wird. Es wäre jedoch auch denkbar, dass die Aufnahme des Behältnisverschlusses während des Expansions- und Befüllungsvorgangs stattfindet.

Die vollständige Ausführbarkeit der Verschließeinheit kann vorteilhaft auch für eine Druckentlastung der Umformungsstation genutzt werden.

Bei einer bevorzugten Ausführungsform weist die Vorrichtung außerdem eine Zufuhreinrichtung auf, welche dem Verschließorgan Behältnisverschlüsse zuführt. Vorteilhaft ist diese Zufuhreinrichtung vollständig außerhalb der Druckkammer und der Hohlform angeordnet. Bevorzugt sind die Behältnisverschlüsse durch die Verschließeinheit dieser Zufuhreinrichtung entnehmbar, wenn die Verschließeinheit vollständig aus der Druckkammer ausgeführt ist.

Vorteilhaft weist die Vorrichtung ein Reservoir für Behältnisverschlüsse auf. Bevorzugt führt die Zufuhreinrichtung der Verschließeinheit Behältnisverschlüsse aus diesem Reservoir zu.

Bei einer bevorzugten Ausführungsform ist die Einfülleinrichtung mit einem Antrieb versehen ist, der so ausgelegt ist, dass er die Einfülleinrichtung bewegen kann. Dabei kann es sich beispielsweise um einen elektromotorischen Antrieb, ein magnetisches Antriebselement, ein pneumatisches Antriebselement oder einen hydraulischen Antrieb handeln. Bevorzugt ist durch diesen Antrieb eine Linearbewegung der Einfülleinrichtung erzeugbar. Vorteilhaft erfolgt diese Linearbewegung in einer Achse, die schräg zur Längsrichtung der Kunststoffvorformlinge steht.

Bei einer weiter bevorzugten Ausführungsform weist die Druckkammer eine Abdichtung auf, welche die Druckkammer nach unten hin abdichtet. Diese Abdichtung kann beispielsweise eine Abdichtung zwischen der Druckkammer und der Hohlform sein. Es kann sich jedoch auch um eine Abdichtung zwischen der Druckkammer und dem Kunststoffvorformling bzw. dem Kunststoffbehältnis handeln. Eine Abdichtung zwischen der Druckkammer und dem Kunststoffvorformling bzw. dem Kunststoffbehältnis kann beispielsweise als Abdichtung am Tragring oder außen am Mundstück ausgestaltet sein. Es wäre jedoch auch eine Abdichtung an einer anderen Geometrie des Kunststoffvorformlings bzw. des Kunststoffbehältnisses denkbar. Es wäre auch eine Abdichtung sowohl zwischen der Druckkammer und der Hohlform als auch zwischen der Druckkammer und dem Kunststoffvorformling bzw. dem Kunststoffbehältnis möglich.

Bei einer bevorzugten Ausführungsform kann außerdem eine Verriegelung der Position der Druckkammer und/oder der Einfülleinrichtung erfolgen. Hierbei ist vorteilhaft, dass der Anpressdruck der Druckkammer und/oder der Einfülleinrichtung nicht gehalten werden muss.

Die Dichtung kann bei einer vorteilhaften Ausführungsform als aktiv schaltbare Dichtung ausgeführt sein. Auch eine Bewegung der gesamten Druckkammer einschließlich der Einfülleinrichtung wäre denkbar. Bevorzugt weist die Vorrichtung bei einer aktiven Dichtung außerdem eine Sicherheitseinrichtung auf, um fehlerhafte Betätigungen zu vermeiden.

Bei einer vorteilhaften Ausführungsform weist die Druckkammer eine Druckregelung auf, um das Druckniveau in der Druckkammer einzustellen. Bevorzugt weist die Vorrichtung auch eine Druckregelung zur Regulierung des Drucks in der Einfülleinrichtung auf.

Vorteilhaft weist die Vorrichtung eine Steuereinrichtung zum Steuern der Druckregelung auf. Die Druckregelung kann die Druckkammer bevorzugt auf ein einzustellendes Druckniveau bringen. Bevorzugt sind in der Steuereinrichtung das Volumen der Einfülleinrichtung und/oder der Verschließeinrichtung berücksichtigungsfähig. Vorteilhaft wird insbesondere die Volumenänderung einer ein- oder ausfahrenden Einfülleinrichtung und/oder Verschließeinrichtung von der Steuereinrichtung berücksichtigt.

Bevorzugt weist die Vorrichtung Leitungen auf, über die Gas von der Druckkammer abgeführt oder zu dieser hingeführt werden kann. Weiter vorteilhaft kann die Vorrichtung einen Tank oder Ringkanal aufweisen, von dem aus der Druckkammer über die Leitungen Gas zugeführt werden kann. Vorteilhaft kann auch ein Recycling des über die Leitungen aus der Druckkammer abgeführten Gases erfolgen, insbesondere kann dieses in den Tank oder Ringkanal rückführbar sein.

Bei einer vorteilhaften Ausführungsform weißt die Vorrichtung eine Reinigungslanze auf, um eine Reinigung im CIP-Prozess durchzuführen, also eine Reinigung ohne Demontage der Vorrichtung. Bevorzugt kann die Reinigungslanze im Reinigungsprozess an der Position der Verschließeinrichtung angeordnet werden. Vorteilhaft kann insbesondere die Einfülleinrichtung durchgespült werden. Bevorzugt kann die Reinigungslanze auch die Reinigung der Hohlform sowie der Reckstange übernehmen. Besonders bevorzugt ist für diesen Reinigungsschritt die Einfülleinrichtung vollständig zurückziehbar.

Bei einer weiter bevorzugten Ausführungsform ist eine Volumenänderung der Druckkammer möglich. Dies ist besonders vorteilhaft, wenn verschiedene Kunststoffbehältnisse mit unterschiedlichen Mundstücken hergestellt werden sollen. Durch die Volumenänderung der Druckkammer ist es möglich, den Druckbereich möglichst klein zu halten. Auf diese Weise kann der erforderliche Gasverbrauch verringert werden.

Eine weitere vorteilhafte Ausführungsform weist außerdem wenigstens eine Inspektionseinrichtung auf. Bevorzugt ist die Inspektionseinrichtung dafür geeignet und dafür vorgesehen die Dichtheit zwischen Einfülleinrichtung und Kunststoffvorformling bzw. Kunststoffbehältnis zu überprüfen. Vorteilhaft ist eine weitere Inspektionseinrichtung vorgesehen, mit der die Abdichtung zwischen Behältnisverschluss und Kunststoffbehältnis überprüft werden kann. Es ist auch denkbar, dass beide Überprüfungen von der gleichen Inspektionseinrichtung ausgeführt werden.

Bei einer weiteren vorteilhaften Ausführungsform weist die Vorrichtung eine Vielzahl von Umformungsstationen auf. Bevorzugt weist die Vorrichtung einen Träger auf, an dem die Umformungsstationen angeordnet sind. Hierbei handelt es sich bevorzugt um einen beweglichen Träger. Insbesondere kann es sich hierbei um einen drehbaren Träger und insbesondere um eine vorgegebene Drehachse drehbaren Träger handeln, wobei bevorzugt an dessen Außenumfang die Umformungsstationen angeordnet sind. Es wäre jedoch auch denkbar, dass die Umformungsstationen wenigstens abschnittsweise entlang eines geradlinigen Transportpfads transportiert werden. So können die Umformungsstationen etwa an einer umlaufenden Kette angeordnet sein. Auch wäre es denkbar, dass die Umformungsstationen geradlinig transportiert werden oder dass die Behältnisse in stationäre Umformungsstationen eingebracht bzw. zu diesen transportiert werden.

Bei einer vorteilhaften Ausführungsform mit einer Vielzahl von Umformungsstationen weist die Vorrichtung bevorzugt ein gemeinsames Reservoir für das Füllgut auf. Bevorzugt wird das Füllgut den einzelnen Umformungsstationen über einen Verteiler zugeführt.

Bei einer bevorzugten Ausführungsform weist die Vorrichtung außerdem mindestens ein Heizelement auf. Vorteilhaft kann mit mindestens einem Heizelement die Temperatur des flüssigen Mediums reguliert werden. Besonders bevorzugt weist jede Umformungsstation ein eigenes Heizelement auf, um die Temperatur des flüssigen Mediums für jedes Kunststoffbehältnis getrennt regeln zu können.

Die vorliegende Erfindung ist weiterhin auf ein Verfahren zum Expandieren und Befüllen von Kunststoffvorformlingen zu Kunststoffbehältnissen mittels eines flüssigen Mediums gerichtet, wobei die Kunststoffvorformlinge innerhalb einer Hohlform einer Umformungsstation durch Beaufschlagung mit einem flüssigen Medium zu den Kunststoffbehältnissen expandiert und gleichzeitig befüllt werden, wobei eine Einfülleinrichtung der Umformungsstation die Kunststoffvorformlinge unter Druck mit dem flüssigen Medium befüllt, und wobei eine Verschließeinrichtung die expandierten und befüllten Kunststoffbehältnisse verschließt.

Erfindungsgemäß werden die Kunststoffbehältnisse verschlossen, während sie sich noch in der Umformungsstation befinden und über eine Druckkammer unter einem Druck stehen, der über dem Umgebungsdruck liegt.

Dabei ist die beschriebene Vorrichtung insbesondere dazu eingerichtet und dafür vorgesehen, dieses beschriebene Verfahren durchzuführen, d.h. dass alle für die obig beschriebene Vorrichtung ausgeführten Merkmale ebenso für das hier beschriebene Verfahren offenbart sind und umgekehrt.

Vorteilhaft werden die Kunststoffvorformlinge unter hohem Druck expandiert und befüllt. In dieser sogenannten Formphase wird den Kunststoffvorformlingen ein flüssiges Medium über die Einfülleinrichtung zugeführt. Bevorzugt beträgt der Druck in der Einfülleinrichtung mehr als 10 bar und besonders bevorzugt mehr als 15 bar. Bevorzugt schließt sich an die Formphase eine sogenannte Haltephase an, in der die expandierten und befüllten Kunststoffbehältnisse weiterhin unter hohem Druck stehen. Bevorzugt wird in der Haltephase der Druck beibehalten, der am Ende der Formphase ausgeübt wurde.

Vorteilhaft wird der Druck solange gehalten, bis die Kunststoffbehältnisse soweit abgekühlt sind, dass eine ungewollte Verformung nicht mehr zu befürchten ist. Besonders bevorzugt wird der Druck gehalten, bis die Temperatur der Kunststoffbehältnisse unter die Glasübergangstemperatur gesunken ist. Die Glasübergangstemperatur von PET liegt etwa bei 75-80°C.

Nach dem Ende der Haltephase wird bevorzugt der Druck in der Entlastungsphase in der Druckkammer - und somit auch der an den Kunststoffbehältnissen anliegende Druck - abgebaut. Der Druck kann hierbei entweder in Stufen oder direkt abgebaut werden. Bevorzugt wird der Druck jedoch nicht vollständig auf den Umgebungsdruck abgebaut. Besonders bevorzugt verbleibt ein Restdruck in der Haltekammer, der über dem Umgebungsdruck liegt. Vorteilhaft werden die Kunststoffbehältnisse nach dem Expandieren und Befüllen nicht vollständig entlastet, sondern es wird bis zum Verschließen ein Druck aufrechtgehalten, der über dem Umgebungsdruck liegt.

Bei einem vorteilhaften Verfahren wird zu Beginn der Formphase eine Einfülleinrichtung in die Druckkammer eingeführt und auf das Mundstück des Kunststoffvorformlings abdichtend aufgepresst. Nach der Formphase wird die Einfülleinrichtung vorteilhaft vom Mundstück des Kunststoffvorformlings abgehoben. Bevorzugt liegt zu diesem Zeitpunkt an der Druckkammer ein Druck an. Vorteilhaft wird die Einfülleinrichtung zumindest teilweise aus der Druckkammer herausgefahren. Bevorzugt fährt die Verschließeinheit anschließend oder zeitgleich mit einem Behältnisverschluss auf das Mundstück des Kunststoffbehältnisses zu.

Bei einem vorteilhaften Verfahren bringt die Verschließeinheit selbst den Behältnisverschluss am Mundstück des Kunststoffbehältnisses an, wobei sie den Behältnisverschluss insbesondere auf das Mundstück aufschrauben kann.

Bei einem bevorzugten Verfahren wird der Behältnisverschluss auch mithilfe der Reckstange und/oder der Einfülleinrichtung aufgebracht. Vorteilhaft übernimmt somit die Reckstange und/oder die Einfülleinrichtung mindestens einen Arbeitsschritt beim Verschließen des Kunststoffbehältnisses.

Vorteilhaft kann die Reckstange und/oder die Einfülleinrichtung einen Snap-On Verschluss auf den Mündungsbereich des Kunststoffbehältnisses drücken. Bei einem Schraubverschluss kann die Reckstange und/oder die Einfülleinrichtung vorteilhaft kleine Drehungen realisieren. Es ist jedoch auch denkbar, dass eine separate Dreheinrichtung in die Druckkammer integriert ist und den Behältnisverschluss aufschraubt.

Bei einem vorteilhaften Verfahren wird der Behältnisverschluss bei Umgebungsdruck in die Druckkammer eingebracht. Vorteilhaft wird erst anschließend der Druck in der Druckkammer erhöht.

Bei einem bevorzugten Verfahren wird der Druck in der Druckkammer eingestellt, bevor die Einfülleinrichtung vom Mundstück des Kunststoffbehältnisses wegbewegt wird. Vorteilhaft wird der Druck im Folgenden reguliert. Bevorzugt wird dabei einerseits das Volumen der Einfülleinrichtung berücksichtigt, während diese aus der Druckkammer herausbewegt wird, und andererseits das Volumen der Verschließeinheit, während diese in die Druckkammer hineinbewegt wird. Aufgrund dieses Ein- bzw. Ausbringens der Einfülleinrichtung bzw. der Verschließeinheit kann es nötig sein, das druckbeaufschlagte Gas zu- oder abzuführen.

Bei karbonisiertem Füllgut liegt der Druck beim Verschließen bevorzugt über dem Sättigungsdruck des Füllguts. Bevorzugt sinkt der Druck in der Entlastungsphase nicht unter den Sättigungsdruck, d.h. dass vorteilhaft der Druck während des Verschließvorgangs nicht neu aufgebaut wird, sondern ein Restdruck aus der Formphase aufrechterhalten wird. Auf diese Weise kann besonders leicht ein Überschäumen des Füllguts vermieden werden. Vorteilhaft kann somit auch Prozesszeit gespart werden.

Vorteilhaft wird allerdings auch bei nicht karbonisiertem Füllgut ein Druck über dem Umgebungsdruck aufrechterhalten. Dies führt beim Hotfill-Prozess dazu, dass auch beim Rücckühlprozess immer noch ein Überdruck innerhalb der Kunststoffbehältnisse wirkt. Auf diese Weise wird Verformungen der Flasche entgegengewirkt. Dadurch, dass weniger Verformungen auftreten, kann beispielsweise die Wanddicke der Kunststoffbehältnisse reduziert werden, was zu Materialeinsparungen und Gewichtsvorteilen führt. Auch beim Coldfill-Prozess ist das Verschließen unter Innendruck vorteilhaft. Auch hier wird durch den leichten Überdruck die Stabilität der Kunststoffbehältnisse erhöht.

Als zusätzlicher Vorteil dieses Verfahrens hat sich gezeigt, dass das Verschließen noch in der Umformungsstation auch deshalb vorteilhaft ist, weil bei dem weiteren Transport der Behältnisse ein Überschwappen des Füllguts unterbunden werden kann.

Bei einem vorteilhaften Verfahren kann außerdem die Füllhöhe des Füllguts innerhalb des Kunststoffbehältnisses eingestellt werden. Hierfür sind zwei verschiedene Vorgehensweisen möglich.

Zum einen kann die Füllhöhe darüber eingestellt werden, dass in der Entlastungsphase zwischenzeitlich in der Druckkammer ein Druck eingestellt wird, der dem Umgebungsdruck entspricht oder darunter liegt. In diesem Verfahrensschritt kann dann Füllgut aus dem Kunststoffbehältnis wieder abgesaugt werden. Das abgesaugte Produkt kann bevorzugt wiederverwendet werden. Vorteilhaft wird das abgesaugte Produkt zurück in ein Reservoir gepumpt. Dieses Verfahren kann auch vorteilhaft sein, um beispielsweise kurz die dichtende Verbindung der Einfülleinrichtung zu trennen und/oder um Verschlüsse nachzufördern. Bevorzugt wird dieses Verfahren jedoch nur bei nicht-karbonisiertem Füllgut angewandt. Bei karbonisiertem Füllgut besteht bei diesem Verfahren die Gefahr eines Überschäumens, da zwischenzeitlich gerade auf die Vorteile des Überdrucks (insbesondere oberhalb des Sättigungsdrucks) verzichtet wird.

Bei einer alternativen Füllhöheneinstellung wird ein Gas, das unter Überdruck steht, in das Kunststoffbehältnis geleitet. Auf diese Weise wird Füllgut aus dem Kunststoffbehältnis gedrückt. Dieses herausgedrückte Füllgut wird über Leitungen beispielsweise Richtung Tank geleitet. Auf diese Weise kann anhand der Menge des eingeleiteten Gases die Füllhöhe in dem Kunststoffbehältnis eingestellt werden. Diese Füllhöheneinstellung eignet sich insbesondere bei karbonisiertem Füllgut. Als Gas kommt beispielsweise CO₂ in Betracht.

Bei einem vorteilhaften Verfahren können die Kunststoffvorformlinge vor dem Expandieren und Befüllen gespült werden. Dabei ist insbesondere eine Spülung mit N₂ oder CO₂ vorteilhaft. Hierdurch kann der Sauerstoff in den Kunststoffvorformlingen reduziert werden.

Vorteilhaft kann auch eine Reinigung der Anlagenteile vor Ort im Rahmen eines ClP-Prozesses erfolgen. Bevorzugt wird hierbei die Einfülleinrichtung durchgespült und aus der Drucckammer zurückgezogen. Nachdem die Einfülleinrichtung zurückgezogen wurde, kann eine Reinigungslanze vorteilhaft die Reinigung der Hohlform übernehmen.

Bei einem vorteilhaften Verfahren können die Anpresskraft der Einfülleinrichtung gegen den Kunststoffvorformling und/oder der Druck einer aktiven Dichtung in einer Closed-Loop-Regelung geregelt werden. Hierzu prüft mindestens eine Inspektionseinrichtung vorteilhaft die Dichtheit der Einfülleinrichtung gegenüber dem Kunststoffvorformling und/oder die Dichtheit der Abdichtung des Behältnisverschlusses zum Kunststoffbehältnis. In Abhängigkeit von dieser Inspektion können Parameter wie die Anpresskraft oder der Druck der aktiven Dichtung nachgeregelt werden.

In einem alternativen Verfahren könnte auch eine Entlastung auf Umgebungsdruck stattfinden. In diesem Fall erfolgt eine stufenweise Entlastung des Drucks. Auch auf diese Weise kann ein Überschäumen von karbonisiertem Füllgut vermieden werden.

Die Anmelderin behält sich daher vor, auch Schutz zu beanspruchen für ein Verfahren zum Expandieren und Befüllen von Kunststoffvorformlingen zu Kunststoffbehältnissen mittels eines flüssigen Mediums, wobei die Kunststoffvorformlinge innerhalb einer Hohlform einer Umformungsstation durch Beaufschlagung mit einem flüssigen Medium zu den Kunststoffbehältnissen expandiert und gleichzeitig befüllt werden, wobei eine Einfülleinrichtung der Umformungsstation die Kunststoffvorformlinge unter Druck mit dem flüssigen Medium befüllt, und wobei eine Verschließeinrichtung die expandierten und befüllten Kunststoffbehältnisse verschließt, wobei erfindungsgemäß die Kunststoffbehältnisse in einem ersten Schritt unter Druck expandiert und befüllt werden, in einem zweiten Schritt dieser Druck gehalten wird, in einem dritten Schritt der Druck stufenweise abgebaut wird und in einem vierten Schritt die Kunststoffbehältnisse in der Umformungsstation verschlossen werden. Bei dieser Ausführungsform kann der Druck auf Umgebungsdruck entlastet werden.

Weitere Vorteile und Ausführungsformen ergeben sich aus den beigefügten Zeichnungen:
Darin zeigen:
- Fig. 1: eine schematische Darstellung der erfindungsgemäßen Umformungsstation;
- Fig. 2: vergrößerte schematische Darstellung der erfindungsgemäßen Umformungsstation;
- Fig. 3: eine mögliche Ausgestaltung der Abdichtungen der Verschließeinheit;
- Fig. 4: ein Diagramm mit bevorzugtem Druckverlauf;
- Fig. 5: ein Diagramm bei stufenweisem Druckabbau;
- Fig. 6: eine schematische Darstellung einer erfindungsgemäßen Vorrichtung.

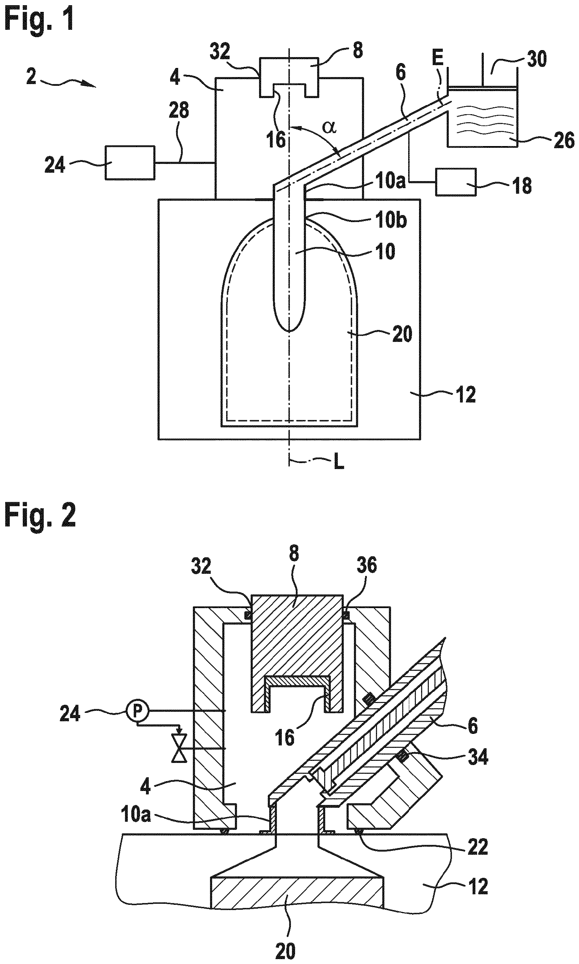

Fig. 1 zeigt eine schematische Darstellung einer erfindungsgemäßen Umformungsstation. Zu erkennen ist die Hohlform 12, in der ein Kunststoffvorformling 10 zu einem Kunststoffbehältnis 20 (gestrichelt dargestellt) expandiert werden kann. Diese Hohlform 10 umfasst den kompletten Grundkörper des Kunststoffvorformlings bzw. Kunststoffbehältnisses. Das Mundstück 10a des Kunststoffvorformlings bzw. Kunststoffbehältnisses ragt aus dieser Hohlform heraus. Oberhalb der Hohlform 12 befindet sich die Druckkammer 4. Diese umfasst das Mundstück 10a des Kunststoffvorformlings bzw. Kunststoffbehältnisses.

Auf das Mundstück 10a ist die Einfülleinrichtung 6 aufgesetzt. Diese ist schräg zur Längsachse L des Kunststoffvorformlings bzw. Kunststoffbehältnisses angeordnet. Die Längsachse des Kunststoffvorformlings bzw. Kunststoffbehältnisses und die Längsachse der Einfülleinrichtung E liegen in einem Winkel α zueinander.

Über die Einfülleinrichtung 6 wird dem Kunststoffvorformling flüssiges Medium aus einem Reservoir 26 zugeführt. Das flüssige Medium wird über Druck zugeführt. Der Druck wird über eine Druckerzeugungseinrichtung 30 erzeugt. Die Einfülleinrichtung kann mittels eines Antriebs 18 bewegt werden, insbesondere aus der Druckkammer 4 zumindest teilweise ausgeführt, bzw. in diese eingeführt werden. Diese Ein- bzw. Ausführbewegung erfolgt bevorzugt in einer geradlinigen Bewegung, bevorzugt stehen also auch während der Bewegung die Längsachse des Kunststoffvorformlings bzw. Kunststoffbehältnisses und die Längsachse der Einfülleinrichtung E in einem Winkel α zueinander. Bei dem Antrieb 18 kann es sich beispielsweise um einen Elektromotor handeln.

Über Leitungen 28 kann der Druckkammer 4 ein Gas zugeleitet werden, bzw. von der Drucckammer abgeleitet werden. Die Zu- bzw. Abführung des Gases wird von der Druckregelung 24 übernommen.

An der oberen Seite der Druckkammer 4 weist diese eine Verschließeraufnahmeöffnung 32 auf. In diese ist eine Verschließeinheit 8 einführbar. Bei eingeführter Verschließeinheit 8 ist die Verschließeraufnahmeöffnung 32 vollständig verschlossen. Die Verschließeinheit 8 kann mittels einer Halteeinrichtung einen Behältnisverschluss 16 halten.

Fig. 2 zeigt einen vergrößerten Ausschnitt der erfindungsgemäßen Umformungsstation, insbesondere der Druckkammer 4. Zu erkennen sind insbesondere wieder die Hohlform 12, die Einfülleinrichtung 6, die auf das Mundstück 10a aufgepresst ist, und die Verschließeinheit 8. Es ist zu sehen, dass die Druckkammer 4 nach unten zur Hohlform 12 hin mit Abdichtungen 22 abgedichtet ist, zur Einfülleinrichtung mit Abdichtungen 34 und zur Verschließeinheit mit Abdichtungen 36.

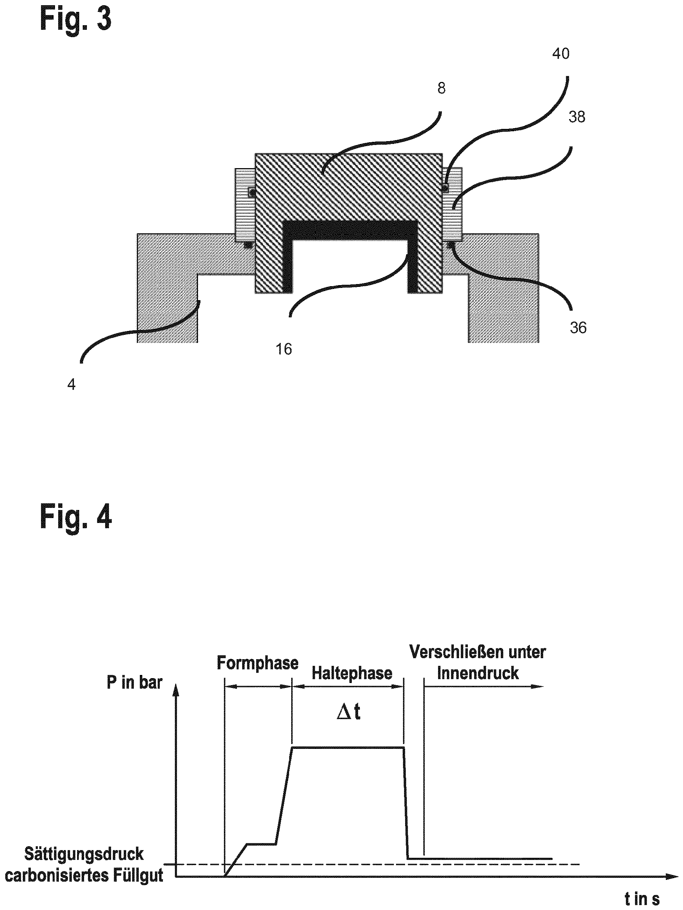

Fig. 3 zeigt eine mögliche Ausgestaltung der Verschließeinheit 8. Auch hier sind die Abdichtungen 36 zu sehen. Zusätzlich ist erkennbar, dass die Verschließeinheit 8 mittels einer Längsführung 38 in die Druckkammer 4 hineingefahren bzw. aus dieser herausgefahren werden kann. Auch hinsichtlich der Längsführung 38 muss eine Abdichtung 40 erfolgen.

Fig. 4 zeigt in einem t-p-Diagramm den Druckverlauf im Laufe des erfindungsgemäßen Verfahrens. Zu Beginn der Formphase wird der Druck erhöht. Eine Erhöhung des Drucks kann stufenweise erfolgen. Anschließend folgt eine Haltephase, in der der Druck über eine gewisse Zeit Δt konstant gehalten wird. Anschließend kommt eine Entlastungsphase, in der der Druck ― in Fig. 4 abrupt ― abfällt. Allerdings fällt der Druck dabei nicht auf das Ausgangsniveau, den Umgebungsdruck zurück. Stattdessen bleibt ein gewisser Innendruck bestehen. Dieser Innendruck liegt dabei insbesondere über einem Sättigungsdruck des karbonisierten Füllguts (gestrichelt eingezeichnet).

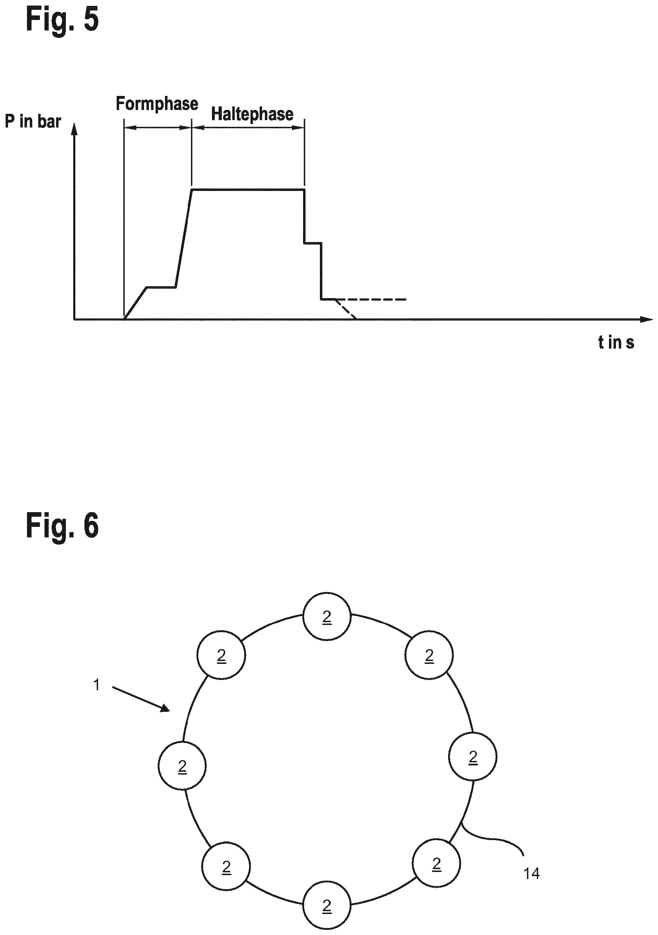

Fig. 5 zeigt, dass nach der Haltephase der Druck auch stufenweise abklingen kann. Der Druck kann dabei bevorzugt ebenfalls nur bis zu einem gewissen Innendruck oberhalb des Sättigungsdrucks zurückgehen. Es wäre jedoch auch denkbar (gestrichelt gezeichnet), dass der Druck nach dem stufenweisen Abklingen auf eine Umgebungsdruck zurückgeht.

Fig. 6 zeigt eine erfindungsgemäße Vorrichtung mit mehreren Umformungsstationen. Die Umformungsstationen sind dabei an einem beweglichen Träger angeordnet. Fig. 6 zeigt als Beispiel eine Vorrichtung vom Typ einer Rundläufermaschine, bei der die Umformungsstationen an einem drehbaren Träger angeordnet sind. Es ist jedoch genauso denkbar, dass die Umformungsstationen an einem linearen Träger montiert sind.

### Bezugszeichenliste

- 1: Vorrichtung
- 2: Umformungsstation
- 4: Druckkammer
- 6: Einfülleinrichtung
- 8: Verschließeinheit
- 10: Kunststoffvorformling
- 10a: Mundstück des Kunststoffvorformlings/Kunststoffbehältnisses
- 10b: Grundkörper des Kunststoffvorformlings/Kunststoffbehältnisses
- 12: Hohlform
- 14: Träger
- 16: Behältnisverschluss
- 18: Antrieb
- 20: Kunststoffbehältnis
- 22: Abdichtung
- 24: Druckregelung
- 26: Reservoir für flüssiges Medium
- 28: Leitungen
- 30: Druckerzeugungseinrichtung
- 32: Verschließeraufnahmeöffnung
- 34: Abdichtungen zur Einfülleinrichtung
- 36: Abdichtungen zur Verschließeinheit
- 38: Längsführung
- 40: Abdichtungen Längsführung
- L: Längsachse eines Kunststoffvorformlings/Kunststoffbehältnisses
- E: Längsachse der Einfülleinrichtung
- α: Winkel zwischen Längsachse des Kunststoffvorformlings bzw. Kunststoffbehältnisses und der Längsachse der Einfülleinrichtung

## Patentansprüche

1. Vorrichtung (1) zum Expandieren und Befüllen von Kunststoffvorformlingen (10) zu Kunststoffbehältnissen (20) mittels eines flüssigen Mediums mit wenigstens einer Umformungsstation (2), die eine Hohlform (12) aufweist, innerhalb der die Kunststoffvorformlinge (10) durch Beaufschlagung mit einem flüssigen Medium zu den Kunststoffbehältnissen (20) expandierbar und gleichzeitig befüllbar sind, wobei die Umformungsstation (2) an einem Träger (14) angeordnet ist und wobei die Umformungsstation (2) eine Einfülleinrichtung (6) aufweist, welche das flüssige Medium den Kunststoffvorformlingen (10) unter Druck zuführt, wobei die Umformungsstation (2) eine Druckkammer (4) aufweist, welche mit einem Gas beaufschlagbar ist und wobei eine Verschließeinheit (8) in die Druckkammer (4) einführbar ist, um die expandierten und befüllten Kunststoffbehältnisse (20) zu verschließen,
**dadurch gekennzeichnet, dass**
die Einfülleinrichtung (6) zum Befüllen der Kunststoffvorformlinge in die Druckkammer (4) einführbar und nach dem Befüllen zumindest teilweise wieder ausführbar ist.

2. Vorrichtung (1) nach Anspruch 1,
**dadurch gekennzeichnet, dass**
die Einfülleinrichtung (6) dichtend an einem Mundstück (10a) des Kunststoffvorformlings (10) anlegbar ist.

3. Vorrichtung (1) nach zumindest einem der vorangegangenen Ansprüche,
**dadurch gekennzeichnet, dass**
die Zustellrichtung der Verschließeinheit in einem Winkel, der von 0° verschieden ist, zu einer Längsachse der Kunststoffbehältnisse liegt.

4. Vorrichtung (1) nach Anspruch 1 oder Anspruch 2,
**dadurch gekennzeichnet, dass**
die Einfülleinrichtung (6) schräg zu einer Längsachse (L) der Kunststoffvorformlinge in die Druckkammer (4) eingeführt wird, bevorzugt in einem Winkel zwischen 20° und 65°.

5. Vorrichtung (1) nach zumindest einem der vorangegangenen Ansprüche,
**dadurch gekennzeichnet, dass**
die Verschließeinheit (8) in einer Achse mit einer Längsachse (L) des Kunststoffvorformlings (10) bzw. des Kunststoffbehältnisses (20) angeordnet ist und/oder geradlinig auf das Kunststoffbehältnis (20) zustellbar ist, um einen Behältnisverschluss (16) an einem Mundstück (10a) des Kunststoffbehältnisses (20) anzubringen.

6. Vorrichtung (1) nach zumindest einem der vorangegangenen Ansprüche,
**dadurch gekennzeichnet, dass**
die Verschließeinheit (8) vollständig aus der Druckkammer (4) ausführbar ist.

7. Vorrichtung (1) nach zumindest einem der vorangegangenen Ansprüche,
**dadurch gekennzeichnet, dass**
die Einfülleinrichtung (6) mit einem Antrieb (18) versehen ist, der so ausgelegt ist, dass er die Einfülleinrichtung (6) bewegen kann.

8. Vorrichtung (1) nach zumindest einem der vorangegangenen Ansprüche,
**dadurch gekennzeichnet, dass**
die Druckkammer (4) eine Abdichtung (22) aufweist, welche die Druckkammer gegenüber der Hohlform (12) und/oder dem Kunststoffvorformling (10) bzw. dem Kunststoffbehältnis (20) abdichtet.

9. Vorrichtung (1) nach zumindest einem der vorangegangenen Ansprüche,
**dadurch gekennzeichnet, dass**
die Druckkammer (4) eine Druckregelung (24) aufweist, um das Druckniveau in der Druckkammer einzustellen.

10. Verfahren zum Expandieren und Befüllen von Kunststoffvorformlingen (10) zu Kunststoffbehältnissen (20) mittels eines flüssigen Mediums, wobei die Kunststoffvorformlinge innerhalb einer Hohlform (12) einer Umformungsstation (2) durch Beaufschlagung mit einem flüssigen Medium zu den Kunststoffbehältnissen (20) expandiert und gleichzeitig befüllt werden, wobei eine Einfülleinrichtung (6) der Umformungsstation (2) die Kunststoffvorformlinge (10) unter Druck mit dem flüssigen Medium befüllt, und wobei eine Verschließeinrichtung (8) die expandierten und befüllten Kunststoffbehältnisse (20) verschließt und die Kunststoffbehältnisse (20) verschlossen werden, während sie sich noch in der Umformungsstation (2) befinden und über eine Druckkammer (4) unter einem Druck stehen, der über dem Umgebungsdruck liegt,
**dadurch gekennzeichnet, dass**
die Einfülleinrichtung (6) zum Befüllen der Kunststoffvorformlinge in die Druckkammer (4) einführbar und nach dem Befüllen zumindest teilweise wieder ausführbar ist.

11. Verfahren nach dem vorherigen Anspruch,
**dadurch gekennzeichnet, dass**
die Kunststoffbehältnisse (20) nach dem Expandieren und Befüllen nicht vollständig entlastet werden, sondern bis zum Verschließen ein Druck aufrechtgehalten wird, der über dem Umgebungsdruck und insbesondere über einem Sättigungsdruck liegt.

12. Verfahren nach einem der beiden vorherigen Ansprüche,
**dadurch gekennzeichnet, dass**
ein Counter Stretch Rod während dem Expandieren und Befüllen der Kunststoffvorformlinge (10) von unten gegen die Kuppe der Kunststoffvorformlinge (10) gefahren wird.

## Claims

1. Apparatus (1) for expanding and filling plastic parisons (10) to form plastic containers (20) by means of a liquid medium, with at least one transforming station (2) which has a hollow mould (12), inside which the plastic parisons (10) can be expanded into plastic containers (20) and can be simultaneously filled by application of a liquid medium, wherein the transforming station (2) is arranged on a carrier (14) and wherein the transforming station (2) has a filling device (6) which feeds the liquid medium to the plastic parisons (10) under pressure, wherein the transforming station (2) has a pressure chamber (4) to which a gas can be applied, and wherein a closing unit (8) can be introduced into the pressure chamber (4), in order to close the expanded und filled plastic containers (20),
**characterised in that**
for filling of the plastic parisons the filling device (6) can be introduced into the pressure chamber (4) and after the filling can be removed at least partially.

2. Apparatus (1) according to claim 1,
**characterised in that**
the filling device (6) can be applied to a mouthpiece (10a) of the plastic parison (10) in a sealing manner.

3. Apparatus (1) according to at least one of the preceding claims,
**characterised in that**
the feed direction of the closing unit is at an angle different from 0° with respect to a longitudinal axis of the plastic containers.

4. Apparatus (1) according to claim 1 or claim 2,
**characterised in that**
the filling device (6) is introduced obliquely with respect to a longitudinal axis (L) of the plastic parisons into the pressure chamber (4), preferably at an angle between 20° and 65°.

5. Apparatus (1) according to at least one of the preceding claims,
**characterised in that**
the closing unit (8) is arranged in an axis with a longitudinal axis (L) of the plastic parison (10) or of the plastic container (20) and/or is movable in a straight line on the plastic container (20), in order to attach a container closure (16) to a mouthpiece (10a) of the plastic container (20).

6. Apparatus (1) according to at least one of the preceding claims,
**characterised in that**
the closing unit (8) can be withdrawn completely from the pressure chamber (4).

7. Apparatus (1) according to at least one of the preceding claims,
**characterised in that**
the filling device (6) is provided with a drive (18) which is designed so that it can move the filling device (6).

8. Apparatus (1) according to at least one of the preceding claims,
**characterised in that**
the pressure chamber (4) has a seal (22) which seals the pressure chamber relative to the hollow mould (12) and/or the plastic parison (10) or the plastic container (20).

9. Apparatus (1) according to at least one of the preceding claims,
**characterised in that**
the pressure chamber (4) has a pressure regulator (24) in order to set the pressure level in the pressure chamber.

10. Method for expanding and filling plastic parisons (10) to form plastic containers (20) by means of a liquid medium, wherein inside a hollow mould (12) of a transforming station (2) the plastic parisons are expanded into plastic containers (20) and can be simultaneously filled by application of a liquid medium, wherein a filling device (6) of the transforming station (2) fills the plastic parisons (10) under pressure with the liquid medium, and wherein a closing device (8) closes the expanded and filled plastic containers (20) and the plastic containers (20) are closed while they are still located in the transforming station (2) and by means of a pressure chamber (4) are under a pressure which lies above the ambient pressure,
**characterised in that**
for filling of the plastic parisons the filling device (6) can be introduced into the pressure chamber (4) and after the filling can be removed at least partially.

11. Method according to the preceding claim,
**characterised in that**,
after the expansion and filling, the plastic containers (20) are not completely relieved of pressure, but until closing a pressure which lies above the ambient pressure and in particular above the saturation pressure is maintained.

12. Method according to one of the two preceding claims,
**characterised in that**
during the expansion and filling of the plastic parisons (10) a counter-stretch rod is moved from below against the tip of the plastic parisons (10).

## Revendications

1. Dispositif (1) pour élargir et remplir des préformes en plastique (10) en récipients en plastique (20) au moyen d'un milieu liquide avec au moins une station de façonnage (2), qui présente un moule creux (12), à l'intérieur duquel les préformes en plastique (10) peuvent être élargies en récipients en plastique (20) et simultanément remplies par sollicitation avec un milieu liquide, dans lequel la station de façonnage (2) est disposée sur un support (14) et dans lequel la station de façonnage (2) présente un système de remplissage (6), lequel amène le milieu liquide sous pression aux préformes en plastique (10), dans lequel la station de façonnage (2) présente une chambre de pression (4), laquelle peut être sollicitée avec un gaz et dans lequel une unité de fermeture (8) peut être introduite dans la chambre de pression (4), afin de fermer les récipients en plastique (20) élargis et remplis,
**caractérisé en ce que**
le système de remplissage (6) pour remplir les préformes en plastique peut être introduit dans la chambre de pression (4) et peut être au moins en partie à nouveau sorti après le remplissage.

2. Dispositif (1) selon la revendication 1,
**caractérisé en ce que**
le système de remplissage (6) peut être placé de manière étanche sur une embouchure (10a) de la préforme en plastique (10).

3. Dispositif (1) selon au moins l'une des revendications précédentes,
**caractérisé en ce que**
la direction d'avance de l'unité de fermeture se situe dans un angle, qui est différent de 0°, par rapport à un axe longitudinal des récipients en plastique.

4. Dispositif (1) selon la revendication 1 ou la revendication 2,
**caractérisé en ce que**
le système de remplissage (6) est introduit de manière inclinée par rapport à un axe longitudinal (L) des préformes en plastique dans la chambre de pression (4), de préférence selon un angle compris entre 20° et 65°.

5. Dispositif (1) selon au moins l'une des revendications précédentes,
**caractérisé en ce que**
l'unité de fermeture (8) est disposée dans un axe avec un axe longitudinal (L) de la préforme en plastique (10) ou du récipient en plastique (20) et/ou peut être avancée en ligne droite sur le récipient en plastique (20), afin de fixer une fermeture de récipient (16) sur une embouchure (10a) du récipient en plastique (20).

6. Dispositif (1) selon au moins l'une des revendications précédentes,
**caractérisé en ce que**
l'unité de fermeture (8) peut être entièrement sortie de la chambre de pression (4).

7. Dispositif (1) selon au moins l'une des revendications précédentes,
**caractérisé en ce que**
le système de remplissage (6) est pourvu d'un entraînement (18), qui est conçu de sorte qu'il peut déplacer le système de remplissage (6).

8. Dispositif (1) selon au moins l'une des revendications précédentes,
**caractérisé en ce que**
la chambre de pression (4) présente un joint d'étanchéité (22), lequel étanchéifie la chambre de pression par rapport au moule creux (12) et/ou à la préforme en plastique (10) ou au récipient en plastique (20).

9. Dispositif (1) selon au moins l'une des revendications précédentes,
**caractérisé en ce que**
la chambre de pression (4) présente une régulation de pression (24), pour régler le niveau de pression dans la chambre de pression.

10. Procédé pour élargir et remplir des préformes en plastique (10) en récipients en plastique (20) au moyen d'un milieu liquide, dans lequel les préformes en plastique sont élargies en les récipients en plastique (20) et remplies simultanément à l'intérieur d'un moule creux (12) d'une station de façonnage (2) par sollicitation avec un milieu liquide, dans lequel un système de remplissage (6) de la station de façonnage (2) remplit les préformes en plastique (10) du milieu liquide sous pression, et dans lequel un système de fermeture (8) ferme les récipients en plastique (20) élargis et remplis et les récipients en plastique (20) sont fermés pendant qu'ils se trouvent encore dans la station de façonnage (2) et sont sous une pression qui se situe au-dessus de la pression ambiante par l'intermédiaire d'une chambre de pression (4),
**caractérisé en ce que**
le système de remplissage (6) pour remplir les préformes en plastique peut être introduit dans la chambre de pression (4) et peut être au moins en partie à nouveau sorti après le remplissage.

11. Procédé selon la revendication précédente,
**caractérisé en ce que**
les récipients en plastique (20) après l'élargissement et le remplissage ne sont pas entièrement déchargés, mais une pression est maintenue jusqu'à la fermeture, qui se situe au-dessus de la pression ambiante et en particulier au-dessus d'une pression de saturation.

12. Procédé selon l'une des deux revendications précédentes,
**caractérisé en ce que**
une tige de contraction est déplacée pendant l'élargissement et le remplissage des préformes en plastique (10) depuis le bas contre le sommet des préformes en plastique (10).
